# EUROPEAN PATENT APPLICATION

(11) **EP 4 674 740 A1**
(43) Date of publication of application: **07.01.2026**
(21) Application number: 24186055.0
(22) Date of filing: 02.07.2024
(51) Int. Cl.: B62J 9/10

(54) **REMOVABLE COVER FOR AN OPENING IN A FRAME ELEMENT OF A BICYCLE**

(71) Applicant: SCOTT Sports SA, 1762 Givisiez (CH)
(72) Inventor: Chylaszek, Dariusz, 1700 Freiburg (CH); Habersetzer, Guillaume, 1700 Freiburg (CH); Moreau, Charles-Edouard, 1580 Avenches (CH)
(74) Representative: Keller Schneider Patent- und Markenanwälte AG

(57) **Abstract**

A removable cover (100) for an opening in a frame element of a bicycle, comprises:
a) a cover main body (101).
b) a locking mechanism (103) arranged in a first end portion of the cover main body (101) to lock the cover (100) to the frame element in a closed position of the cover (100).
c) a hook structure (102) arranged on an inner main surface (101s) of the cover main body (101), on a second end portion of the cover main body (101) opposite the first end portion, to cooperate with the frame element by interlocking the hook structure (102) and a pivot structure (150) of the frame element and creating a hinge mechanism allowing for swivelling the cover (100) relative to the frame element about a swivel axis in the second end region, between a mounting position and the closed position.
wherein
d) a magnet or a ferromagnetic element (104) is arranged on the cover (100), in the second end portion of the cover main body (101) to cooperate with a ferromagnetic counter-element or a counter-magnet (154) on the frame element in order to guide a placement of the cover (100) into the mounting position during a mounting process of the cover (100).

## Description

### Technical Field

The invention relates to a removable cover for an opening in a frame element of a bicycle.

### Background Art

Said openings are e.g. formed by holes in a wall of an at least partially hollow, in particular tube-shaped, frame element. They make an inner volume of the frame element accessible to serve as an accommodation for e.g. a shock absorber for a rear wheel of the bicycle. Such a shock absorber needs to be easily accessible to allow maintenance, detachment or replacement actions. Another example is an accommodation for a drive battery of an e-bike drive, which frequently needs to be extracted for recharging, storage or replacement. Openings in a frame element can also open up to storage space such as for tools, inner tubes or clothes that need to be easily accessible. To protect the contents of these spaces and accommodations a cover is used that closes the opening e.g. while the bicycle is used. The cover shields the inside of the frame element and its contents from dirt, water, e.g. rain, sunbeams, any kind of impacts and also theft. It can make a bicycle more aerodynamic and also serves as an optical barrier that improves the overall optical appeal of the bicycle. Hence, when in a closed position, the cover needs to be securely locked to the frame without risks of e.g. being loosened by shaking movements of the bicycle, while at the same time it needs to be easily openable to allow access to the opening.

It is known in the art to provide covers that are completely removable from the opening, to give as much space as possible when access to the opening is needed. Such a cover can e.g. comprise means that are partially insertable into the opening to then press against the inside of the frame element to hold the cover in place. The cover can also e.g. comprise locking means to lock the cover to the frame when in a closed position. It is also possible to hold a cover main body to the frame by holding means on the frame that are e.g. placed around the opening.

The known solutions have the disadvantage that an installation to the frame element is often unintuitive and can pose a challenge to the user, especially when the opening is not clearly visible, e. g. in darkness, or when the opening in the frame element is placed at the underside of a frame element. In particular it is difficult to find the correct starting point to move the cover into a closed state. This can render the use of the accommodation in the frame element unpractical, time consuming and frustrating.

### Summary of the invention

It is the object of the invention to create a cover pertaining to the technical field initially mentioned, whose use is simplified and more intuitive.

The solution of the invention is specified by the features of claim 1. According to the invention, a removable cover for an opening in a frame element of a bicycle comprises:
a) A cover main body.
b) A locking mechanism arranged in a first end portion of the cover main body to lock the cover to the frame element in a closed position of the cover.
c) A hook structure arranged on an inner main surface of the cover main body, on a second end portion of the cover main body opposite the first end portion, to cooperate with the frame element by interlocking the hook structure and a pivot structure of the frame element and creating a hinge mechanism allowing for swivelling the cover relative to the frame element about a swivel axis in the second end region, between a mounting position and the closed position,
   wherein
d) a magnet or a ferromagnetic element is arranged on the cover, in the second end portion of the cover main body to cooperate with a ferromagnetic counter-element or a counter-magnet on the frame element in order to guide a placement of the cover into the mounting position during a mounting process of the cover.

A frame element is an element of a bicycle frame, e.g. a head tube, a top tube, a down tube, a seat tube, chain stays, seat stays, a part of the fork or any combination of these and can in particular be at least partly tube-shaped. The frame element can e.g. be hollow or partly hollow to contain a volume that serves as an accommodation. The frame element can also have a shape that differs from a tube and e. g. comprise a bulge to give sufficient space to accommodate certain components. The opening can open up to an accommodation for e.g. a shock absorber for a rear wheel of the bicycle, a battery for an e-bike drive of the bicycle or for tools, inner tubes or clothes.

The opening can be any kind of opening that allows at least the passing of e.g. air from outside of the frame element to a volume inside of the frame element. In particular the opening has a size and shape that is adapted to a size and shape of the objects that are foreseen to be accommodated at least partly within the frame element like e.g. a shock absorber or a battery.

The cover main body serves to close an opening in a frame element. As such, the cover main body may be essentially a flat body of e.g. a cuboid, triangular, round or any other shape, in particular with two opposing main surfaces that are larger than the rest of the cover main bodies surfaces. The cover main body may also be curved and also e.g. having a bulge and/or a concave inner main surface to e.g. also cover objects within a frame element that are not fully incorporated by the frame element and "stick out" of an opening or to generally match the outer profile of the frame element. The cover may also comprise wall like sections that are angled to at least one of the main surfaces. They can e.g. increase the volume that can be accommodated within a frame element together with the cover.

The cover main body comprises at least one inner main surface. This surface is dedicated to face towards the frame element when the cover is in the closed position. The inner main surface may be flat but can also be e.g. a continuous but curved or bulged surface.

The cover main body can be made out of metal, e.g. aluminium or steel, plastic, or a composite material but also other materials like wood are possible. The size of the cover main body generally depends on its purpose and may e.g. be generally in the same scale as the size of e.g. a shock absorber or a battery.

An end portion of the cover main body may be a portion that comprises an edge of the cover main body and preferably a part of the inner main surface. In particular, an end portion comprises no more than 30% of the overall surface area of the inner main surface. In case of an elongated cover, an end portion preferably comprises a portion of the cover main body that is the furthest from a geometric centroid of the cover main body. In particular, an end portion is symmetric, preferably to a symmetry plane that also incorporates the geometric centroid of the cover main body.

The first end portion of the cover main body preferably matches the criteria of an end portion as described above.

The second end portion of the cover main body preferably matches the criteria of an end portion as described above and is opposed to the first end portion with respect to a geometric centroid of the cover main body.

To describe the cover and its cover main body in the following the terms axial and lateral are used. Axial designates any directions, dimensions, location-coordinates or lines that are parallel or are measured parallel to a connecting line between the first end portion and the second opposing end portion of the cover main body, in particular through a geometric centroid of each end portion.

Axial rotations of the cover or the cover main body are rotations where the cover or cover main body rotate about an axis of rotation that is oriented in an axial direction as described above.

Lateral describes any directions, dimensions and location-coordinates that are perpendicular to axial directions and preferably are on the inner main surface.

The locking mechanism serves to lock the cover in its closed position relative to a frame element and/or a locking structure. In particular, in the closed position of the cover it has a closed configuration in which it cooperates with the frame element, to hinder the cover from swivelling about the swivel axis relative to the frame element. Preferably, the locking mechanism also has an open configuration in which it does not hinder the frame element from swivelling. Preferably, the locking mechanism is a mechanical locking mechanism. This means that in particular a body part of the locking mechanism in its closed configuration cooperates with any part of the frame element, to hinder the cover from said swivelling. The locking mechanism can comprise a lock and key mechanism. It can also comprise a lever or a rotary switch that allows switching the lock from the closed configuration to the open configuration.

Preferably, the hook structure is firmly connected to the cover main body, in particular it is formed in one piece with the cover main body. The hook structure can e.g. comprise a generally cuboid proximal base structure that is attached to the cover main body and e.g. a generally cuboid distal angled structure that is attached to a distal end of said base structure. In particular, the angled structure can have a minimum inner angle of e.g. 20° to 110° to the base structure. The angled structure can e.g. be oriented parallel to the inner main surface of the cover main body. Preferably, the free end of the inner main structure is directed away from a geometrical centroid of the cover main body. The hook structure can also e.g. comprise a distal curved or bent structure. In a closed position of the cover, the hook structure is preferably interlocked with the frame element and thus serves to hold the cover in place together with the locking mechanism. Preferably in a closed position of the cover a contact surface of the hook structure engages a contact surface of the pivot structure of the frame element, said contact surface of the pivot structure facing towards the inside of the frame element.

Preferably, the unattached cover can be brought into the mounting position in a mounting process by approaching the cover towards the frame element in at least one direction, until the cover is in the mounting position. The mounting process can also comprise several movements, e.g. several successive movements in different directions until the cover is placed in the mounting position.

When the cover is in the mounting position, the hook structure engages the pivot structure of the frame element and the cover can be swivelled into the closed position about the swivel axis. It is possible that the cover can also additionally swivel about other axis or move in another, e.g. axial, direction while it is swivelled into the closed position.

Preferably the cover in the mounting position can also be removed from the frame element freely in at least one direction.

When the cover is in a closed position, it covers the opening of the frame element at least partially. In particular, in the closed position both the hook structure and the locking mechanism of the cover engage with parts of the frame element. Preferably, the cover in the closed position is not removable from the frame element when the locking mechanism is in the closed configuration. However preferably when the locking mechanism is in the opened configuration the cover can be swivelled back into the mounting position.

The pivot structure describes a part of the frame element that is in contact with the hook structure in the mounting position of the cover and preferably also the closed position of the cover. The pivot structure can be a simple section of wall material of a tube-shaped frame element, e.g. close to the opening in the frame element, in particular an axially rearward edge of the opening. The pivot structure can also feature a pivot body that comprises a contact surface with a shape that differs from the inner wall surface of the rest of the frame element. For example, the contact surface of the pivot body may be shaped to form a negative of a contact surface of the hook structure. In particular the pivot body may then be arranged such that the contact surface of the pivot body and the contact surface of the hook structure are in full contact when the cover is in the closed position. The pivot structure may also comprise a, preferably non rotatable, pivot axle that is engaged by the hook structure in the mounting position, that allows the hook structure to swivel around it.

When the cover is in the mounting position, the hook structure and a pivot structure of the frame element create a hinge mechanism that allows for swivelling the cover relative to the frame element into the closed position. The hinge mechanism may be a simple contact region of parts of the hook structure with a part of the frame element. Preferably, the hinge mechanism will to at least some extent prevent the cover from movements that would bring the cover in a position where no swivelling is possible, e.g. axial rotations of the cover main body (see below for further details).

The hinge mechanism formed by the hook structure and the pivot structure allows for swivelling about a swivel axis. In particular, the swivel axis is placed at a free end of the hook structure and preferably is parallel to a lateral direction. Preferably, the swivel axis is parallel to the inner main surface of the cover main body.

The magnet or ferromagnetic element will typically be small compared to the cover main body, e.g. less than 10% of its volume. It can have any form and might e.g. be cuboid, wedge-shaped, prism-shaped, spherical, ellipsoid, cylindrical, conical or have a more complex shape like a pipe-shape or a torus shape. It can also consist of several parts of e.g. the above shapes.

A magnet may be any kind of permanent or electric magnet, while a permanent magnet is preferred. Examples for materials to serve as a permanent magnet are e.g. magnetised iron, magnetised nickel, magnetised cobalt, their alloys or magnetised alloys of rare-earth metals like neodymium (e.g. magnetised NdFeB). A ferromagnetic element can be any element that comprises a ferromagnetic material like iron, nickel, cobalt, their alloys or alloys of rare-earth metals like neodymium (e.g. NdFeB).

A ferromagnetic counter-element or a counter-magnet is any kind of element that creates a magnetic force between itself and the magnet or ferromagnetic element. It can e.g. comprise one or more of the aforementioned ferromagnetic materials. It might be formed by a wall part of the frame element (e.g. when the frame element itself comprises a ferromagnetic material) or it can be e.g. fixed to a pivot body of a pivot structure.

The inventive cover is easily and intuitively brought into the closed position from an unattached state, even without clear visibility of the opening on the frame element. The magnet or ferromagnetic element creates an attractive force between the cover and the frame element to guide the end portion of the cover together with the hook structure towards the pivot structure of the frame element. The force itself does not need to support the cover or even attach the cover as it may also merely serve as a haptic guidance to the user of the cover. The magnet or ferromagnetic element assures a correct placement of the cover in the mounting position. From the mounting position, the hook structure, forming the hinge mechanism, will guide the cover when it is brought into its closed position. Thus the cover can be correctly placed for the locking mechanism to allow locking the cover in place securely. This way, the cover is both easily usable even in low visibility conditions and still stays safely locked even when subject to strong forces, by e.g. vibrations or physical hits.

In a preferred embodiment of the invention, the magnet or ferromagnetic element is arranged in an axial region of the second end portion comprising an undercut portion of the hook structure. The axial region of the second end portion comprising the undercut portion of the hook structure is preferably a region defined by its axial extension, that comprises all parts of the second end portion, whose axial position is equivalent to an axial position of any part of the hook structure that is an undercut portion. Undercut portion here preferably means a portion of the hook structure comprising a surface that faces the cover main body. The magnet or ferromagnetic element being arranged in the axial region means in particular, that at least one point of the magnet or ferromagnetic element has an axial position that is equivalent to an axial position of the region.

This arrangement has the advantage, that the magnet can e.g. effectively pull the hook structure towards the pivot structure, in particular towards a contact surface of the pivot structure, thereby both axially aligning the cover during the mounting process and also assuring that the hook structure does not lose contact e.g. during the swivelling. Another advantage is the magnet being close to the swivel axis of the hinge mechanism and hence a swivelling of the cover will not significantly increase a distance of the magnet to the frame element and thus already in the mounting position of the cover the magnet can exert a comparatively strong force on the cover. This again renders the cover especially intuitive in its usage.

Alternatively the magnet or ferromagnetic element could also be placed within another axial region, e.g. in front of the hook structure, relative to the first end portion of the cover.

In a preferred embodiment of all above described embodiments, the magnet or ferromagnetic element is placed axially closer to the first end portion of the cover main body than a distal free end of the hook structure.

Being axially closer preferably means that at least one point of the magnet is axially closer to the first end portion than the point on the distal free end that axially is the furthest from the first end portion. Preferably, all of the magnet or ferromagnetic element is axially closer to the first end portion of the cover main body than a distal free end of the hook structure.

This placement has the advantage that the magnet or ferromagnetic element can exert a torque on the cover, as the cover will typically swivel about the distal part of the hook structure. Thereby the magnet or ferromagnetic element both guides the cover during the mounting process and also during the swivelling into the closed position. This makes the use of the inventive cover intuitive and also comfortable, as the user is guided in all steps of a closing procedure.

Alternatively, the magnet or ferromagnetic element can be placed axially further from the first end end portion of the cover main body than a distal free end of the hook structure.

In a preferred embodiment of all embodiments of the invention the magnet or ferromagnetic element has an axial position that corresponds to an axial position of a proximal end of the hook structure.

Having an axial position that corresponds to the axial position of the proximal end of the hook structure means preferably that at least one point of the magnet or ferromagnetic element has an axial position that is equivalent to at least one point of a proximal end of the hook structure.

Placing the magnet or ferromagnetic element axially close to the proximal end of the hook structure has the advantage of a lower structural stress on the hook structure during the mounting process. The force acting on the magnet or ferromagnetic element can create a torque that acts between the hook structure and the cover main body, where the proximal end of the hook structure acts as fulcrum. Placing the magnet or ferromagnetic element close to the proximal end of the hook structure will ensure that this created torque cannot lead to deformation or damaging of the hook structure and/or the cover. In summary this arrangement will create a robust and durable cover.

Alternatively, the magnet or ferromagnetic element can be placed at a different axial position, e.g. further towards the free end of the second end portion of the cover main body than the proximal end of the hook structure.

In a preferred embodiment of the invention, the magnet or ferromagnetic element laterally extends further from an axial centreline of the cover main body, in particular in two opposing lateral directions, than the hook structure.

An axial centreline of the cover main body corresponds to a line that lies on an axial symmetry plane of the cover main body and preferably also runs through a geometric centroid of the cover main body. If no true axial symmetry plane exists, an axial centreline might be a line that lies on an axial plane to which as many parts of the cover main body as possible are symmetrical, i.e. the closest approximation of an axial symmetry plane, and wherein the line preferably also runs through a geometric centroid of the cover main body.

To laterally extend further from an axial centreline means that at least one point on the magnet or ferromagnetic element has a lateral position that has a larger closest distance from an axial centreline of the cover than any point of the hook structure. However, this can include a magnet or ferromagnetic element, that partially overlaps with the hook structure. Particularly (see below) when the magnet or ferromagnetic element comprises a first part and a second part, the two parts can be placed such that the hook structure is at least partially placed between the two parts.

Placing the magnet or ferromagnetic element further from an axial centreline of the cover main body than the hook structure helps to stabilize the cover against axial rotations during e.g. the swivelling as the magnet or ferromagnetic element will counteract e.g. axial rotations of the cover main body about a free end of the hook structure. Thereby, the cover can be reliably swivelled into the closed position and becomes especially intuitive and easy to use. Additionally a lateral placement outside of the hook structure ensures that the hook structure does not block a contact of the magnet or ferromagnetic element with a counter-magnet or ferromagnetic counter-element on a frame element. This way the magnet or ferromagnetic element can be designed compactly, reducing the overall weight of the inventive cover.

The magnet or ferromagnetic element can alternatively also be placed e.g. on the axial centreline of the cover main body.

In a preferred embodiment of all above variants of the invention, the hook structure comprises a guiding surface, said guiding surface facing towards the inner main surface of the cover, wherein the guiding surface has an inner angle towards a plane that is parallel to the inner main surface of the cover at a proximal end of the hook structure, which inner angle is less than 90° and wherein the magnet or ferromagnetic element is axially placed at a proximal end of the guiding surface.

In particular, the guiding surface faces towards the free end of the second end portion of the cover main body. The guiding surface is in particular at least partially perpendicular to a symmetry plane of the cover main body. Preferably, the s surface is placed between the free end of the hook structure and the cover main body.

During the mounting process, such a guiding surface will help to guide the cover into the mounting position. When a part of the frame structure, in particular of the pivot structure of the frame element, comes into contact with the guiding surface, the angled guiding surface will create a sliding movement of the cover until the cover is in the mounting position.

E.g. the pivot structure of the frame element may comprise a corresponding (prominent) guiding part that will easily come into contact with the guiding surface of the hook structure. In particular the force on the magnet or the ferromagnetic element will support or initiate such a sliding movement, e.g. until the magnet or ferromagnetic element is in physical contact with its counterpart as e.g. a counter-magnet or a ferromagnetic counter-element. Thus the guiding surface additionally renders the inventive cover more intuitive and easily usable.

In a preferred further embodiment of the invention, the magnet or ferromagnetic element is placed on the hook structure, in particular on a free end of the hook structure.

In particular, a surface of the magnet or the ferromagnetic element that faces away from the cover main body is uncovered. In particular the surface of the magnet or the ferromagnetic element that is the furthest from the cover main body is also further from the cover main body than all parts of the hook structure.

The magnet or ferromagnetic element being placed on the hook structure allows for a compact design of the cover where the hook structure is structurally strong. It also allows for the magnet to ensure a good placement of the hook structure and especially its free end, as the magnet will guide especially the free end of the hook structure in nearly all directions.

In a preferred variant of all the above mentioned embodiments of the invention, the hook structure comprises a first and a second stabilizing surface on two opposing lateral sides of the hook structure, the first and the second stabilizing surface being arranged perpendicular to the swivel axis to cooperate with the pivot structure of the frame element, preventing the cover from axial rotations.

In particular the two stabilizing surfaces are placed on either side of the free end of the hook structure and face towards opposing directions. Preferably a pivot structure of the frame element comprises corresponding stabilizing regions that come into contact with the stabilizing surfaces of the hook structure when the cover is in the mounting position. In particular, the stabilizing surfaces are flat. Preferably, the stabilizing surfaces are the laterally outermost regions of the hook structure, however it is also possible to place them further inside. Preferably, the magnet or ferromagnetic element is placed at least partially further from an axial centerline of the cover main body than the first and the second stabilizing surface. Preferably, the first and the second stabilizing surface are arranged between a first part and a second part of the magnet or ferromagnetic element (see below).

By contacting the frame element in the mounting position of the cover, the stabilizing surfaces will stabilise a swivelling motion of the cover by preventing any unwanted axial rotations of the cover. Axial rotations here preferably designate rotations of the cover about an axis that is parallel to an axial centreline of the cover main body. Thereby the cover becomes easier to swivel into the closed position, as malfunctions like popping out of the opening due to a wrong rotation are prevented. This renders the cover more intuitive and easier to use.

Alternatively, there can be no stabilizing surfaces on the hook structure.

In a preferred variant of all the above mentioned embodiments of the invention, the magnet or ferromagnetic element comprises a first part and a second part, wherein the first part and the second part assume different lateral positions on the cover.

Such a first part and a second part can in particular be two bodies of the same material and the same shape and size.

Different lateral positions can in particular mean that the geometrical centroids of the first part and the second part assume different lateral positions on the cover. In particular the first and the second part are placed apart such that they do not laterally overlap.

The magnet or ferromagnetic element comprising a first and a second part has the advantage that the total volume of the magnet or ferromagnetic element can be relatively small while at the same time relatively large torques can be achieved that help to stabilize the cover e.g. against axial rotations. Thereby the cover becomes light and stable.

Alternatively the magnet or ferromagnetic element can e.g. consist of only one body.

In a preferred embodiment of the inventive cover, the first part of the magnet or ferromagnetic element and the second part of the magnet or ferromagnetic element have an identical axial position and are laterally placed on different sides of an axial centreline of the cover, preferably with each of the parts of the magnet or ferromagnetic element having an identical distance to the axial centreline of the cover.

An identical axial position preferably indicates an identical axial position of a geometric centroid of each of the parts.

Placing the first and the second part of the magnet or ferromagnetic element on identical axial but opposing lateral positions allows to efficiently secure the cover as well as especially well preventing unwanted axial rotations of the cover, e.g. while swivelling into the closed position. Additionally the first part and the second part will also be able to guide the cover in its alignment towards the frame element.

If the parts are placed with an identical distance to the axial centreline of the cover this additionally prevents the parts of inducing an additional torque on the cover during the mounting procedure, which makes the cover especially intuitive to use.

Alternatively the two parts can be placed on differing axial positions.

In a preferred embodiment of the invention, the hook structure is laterally placed between the first part and the second part of the magnet or ferromagnetic element.

This arrangement creates a specifically stable and light cover, as the two parts of the magnet or ferromagnetic element efficiently prevent any axial rotations of the cover, especially about a free end of the hook structure. They also efficiently ensure that the hook structure is both laterally and axially well aligned with a pivot structure of a frame element.

Alternatively the first and the second part of the magnet or ferromagnetic element may also be placed e.g. within the hook structure.

In a preferred embodiment of all above alternatives of the invention, the locking mechanism is a spring loaded locking mechanism or a turn locking mechanism, in particular a ¼ turn locking mechanism.

A spring loaded locking mechanism preferably comprises a spring loaded locking element. The locking element may e.g. comprise a sliding surface, that is arranged to cooperate with a locking structure to push the spring loaded locking element against a spring force during an insertion process of the locking element when the cover swivels into the closed position. When the cover is in the closed position, the locking element may e.g. be pulled back by the spring force into a position where it is blocked from being extracted from the locking structure. The spring loaded locking element may in particular be actuated against the spring force by a lever, preferably on an opposing side of the cover main body. The lever thus allows to bring the locking mechanism into an open configuration.

The advantage of a spring loaded locking mechanism is the intuitive usage.

A turn locking mechanism may comprise a rotatably mounted locking element such that the locking mechanism (in the closed position of the cover) is in a closed configuration when the locking element is in a rotational locking-position and opened in a rotational open-position. Preferably, the locking-position and the open-position of the locking element of the locking mechanism have a rotational difference of ¼ of a full rotation.

The turn locking mechanism has the advantage of being especially secure while still being easily and intuitively used.

Alternatively the locking mechanism may e.g. comprise a latch or e.g. bolts.

In a preferred embodiment of all above alternatives of the invention, the first part and/or the second part of the magnet or ferromagnetic element has a trapezoidal prism shape with a rectangular base face and a smaller rectangular top face parallel to the base face, wherein the first and/or second part is arranged on the cover with its top face facing away from the cover main body.

In particular, each trapezoidal prism shape further comprises two opposing and angled rectangular side faces with a same size and two opposing and parallel convex isosceles trapezoid shaped side faces with a same size.

In particular, the first and/or the second part is a permanent magnet, in particular a bar magnet, and the poles are arranged such, relative to the shape, that magnetic field lines of a magnetic field of the first and/or the second part mainly penetrate through the top face and the base face.

This prism shape allows the first part and/or the second part of the magnet or ferromagnetic element to be securely held e.g. in a holding structure without any bolts or even glue between the first and/or the second part and the cover main body. As the base face of the first and/or second part is larger than its top face, the first and/or second part is easily attachable to the cover main body by e.g. an aperture or holding surfaces that preferably contact the angled rectangular side faces of the first and/or the second part.

Additionally, the shape is easily producible and shows especially well suited magnetic characteristics as the top face can exert a strong magnetic force that efficiently guides the cover.

Preferably, a first and/or a second holding structure for the first part respectively the second part of the magnet or ferromagnetic element is placed on the cover main body, the first and/or the second holding structure comprising at least two opposing inner holding surfaces that have a same angle and distance towards each other as two angled side faces of the first respectively the second part of the magnet or ferromagnetic element.

In particular, the holding surfaces are flat and have the same or a larger size as the angled side faces of the first, respectively the second part of the magnet or ferromagnetic element.

Preferably, the first and/or the second holding structure is open, such that the top face of the first respectively the second part of the magnet or ferromagnetic element is not in contact with any parts of the respective holding structure. The first and/or second holding structure may e.g. comprise a mounting opening, the mounting opening having an aperture with a size that corresponds to a trapezoid shaped side face of the first respectively the second part, allowing to insert the first, respectively the second part via the trapezoid shaped side face, preferably in an axial direction.

The first and/or the second holding structure securely and durably supports the first respectively the second part of the magnet or ferromagnetic element, while only needing a limited space on the cover main body. This allows for a light but durable cover while the magnet or ferromagnetic element is easily installable on the cover.

Alternatively, another holding structure can be used, e.g. bolts or clamps.

Another preferred embodiment of the invention is a cover arrangement, comprising
a) a cover according to any one of the above described embodiments of the invention;
b) a pivot structure for a frame element that is configured for creating a hinge mechanism with the hook structure of the cover in the mounting position of the cover, the pivot structure comprising a counter-magnet or ferromagnetic counter-element;
c) a locking structure for the frame element that is configured to cooperate with the locking mechanism of the cover to lock the cover in its closed position.

The pivot structure preferably comprises a pivot body that comprises a contact surface to contact the hook structure of the cover. For example, the contact surface of the pivot body may be shaped to form a negative of a contact surface of the hook structure. In particular the pivot body is arranged such that the contact surface of the pivot body and the contact surface of the hook structure are in full contact when the cover is in the closed position. The pivot structure may comprise mounting means to fasten the pivot structure to a frame element, e.g. one or more mounting openings to insert bolts.

In particular, the pivot structure comprises a counter-magnet in the case that the cover comprises a ferromagnetic element. If the cover comprises a magnet, the pivot structure may comprise a counter-magnet or a ferromagnetic counter-element.

The locking structure preferably comprises a locking body with a locking surface to come into contact with the locking mechanism of the cover when the cover is in the closed position and locked.

In particular, the locking body of the locking structure comprises a sliding surface, preferably angled, e.g. with an inner angle of 45 degree to 110 degree, with respect to the locking surface, such that a spring loaded locking element of a spring loaded locking mechanism may slide along the sliding surface in a locking process. Alternatively, the locking body may e.g. comprise a locking aperture to hold a rotatable locking element of a turn locking mechanism against the locking body in a locked state of the cover. The locking body in particular also comprises mounting means to mount the locking structure to a frame element, e.g. mounting openings to insert bolts.

In a preferred embodiment of the inventive cover arrangement, the pivot structure comprises a counter-hook structure that is configured to cooperate with the hook structure of the cover, wherein the hook structure and the counter-hook structure interlock to form the hinge mechanism.

In particular, the counter-hook structure is placed on the pivot body. Preferably, the contact surface of the pivot body is placed on the counter-hook structure. The counter-hook structure may be formed in one piece with the rest of the pivot structure.

Alternatively, the pivot structure may e.g. comprise a flat contact surface without a counter-hook structure.

In a preferred embodiment of the cover arrangement, the cover is a cover according to the above described alternatives where the magnet or ferromagnetic element is placed axially closer to the first end portion of the cover main body than a distal free end of the hook structure and wherein the pivot structure comprises a counter-magnet, wherein the magnet or ferromagnetic element and the counter-magnet are dimensioned such that they exert an attractive force strong enough in the mounting position of the cover to swivel the cover on the frame element into the closed position, when no external forces other than the gravitational force act on the cover.

In particular the cover comprises a magnet with a first part and the second part, wherein the first part and the second part comprise a magnetized ferromagnetic material. The force needed to swivel the cover on the frame element into the closed position is dependent on several factors of the arrangement: The exact distance of the magnet or ferromagnetic element from the free end of the free end of the hook structure, e.g. 5 - 20 mm; the (closest) distance of the magnet or ferromagnetic element to the counter-magnet in the mounting position, e.g. 1-10 mm; the weight of the cover, e.g. 0.1 - 1 Kg; the amount of swiveling needed between the mounting position and the closed position, e.g. 0.01 - 0.5 turns about the swivel axis and also the position of the cover in the mounting position relative to the earth gravitational field.

This arrangement has the advantage of the cover being automatically swiveled into the closed position, once it is moved into the mounting position in a mounting process. This makes the cover arrangement even easier and more intuitive to use.

Alternatively the magnet or ferromagnetic element may be dimensioned only to give a haptic guidance during a mounting process, without enough strength to even counteract the weight of the cover.

Another embodiment of the invention is the use of the inventive cover to cover an accommodation for a shock absorber or for a drive battery or for a storage space such as for tools, inner tubes or clothes.

Other advantageous embodiments and combinations of features come out from the detailed description below and the entirety of the claims.

### Brief description of the drawings

The drawings used to explain the embodiments show:
- Fig. 1: A first embodiment of a cover arrangement as an explosion view from a cavalier perspective;
- Fig. 2: the first embodiment in an assembled state from a cavalier perspective;
- Fig. 3: a direct top view on an outer side of the first embodiment;
- Fig. 4: a direct top view on an inner side of the first embodiment;
- Fig. 5a, b: a sectional view of the first embodiment along a plane that is parallel to a line A in fig. 4 and perpendicular to the picture plane of fig. 4, wherein fig. 5b shows a detailed view of the circled section in fig. 5a.
- Fig. 6a - c: the first embodiment during a mounting process on a first frame element in a similar section view to fig. 5;
- Fig. 7: a second embodiment of a cover arrangement as an explosion view from a cavalier perspective;
- Fig. 8: the second embodiment in an assembled state from a cavalier perspective;
- Fig. 9: a direct top view on an outer side of the second embodiment;
- Fig. 10: a direct top view on an inner side of the second embodiment;
- Fig. 11a - c: a sectional view of the second embodiment along a plane that is parallel to line B in fig. 10 and perpendicular to the picture plane of fig. 10, wherein fig. 11b and fig. 11c show detailed views of the circled sections in fig. 11a;
- Fig. 12a - c: the second embodiment during a mounting process on a second frame element in a similar section view to fig. 11a - c;
- Fig. 13: a bicycle with the cover arrangement according to the first embodiment and the cover arrangement according to the second embodiment installed on the first and the second frame element, a seat tube and a down tube respectively.

In the figures, the same components are given the same reference symbols.

### Preferred embodiments

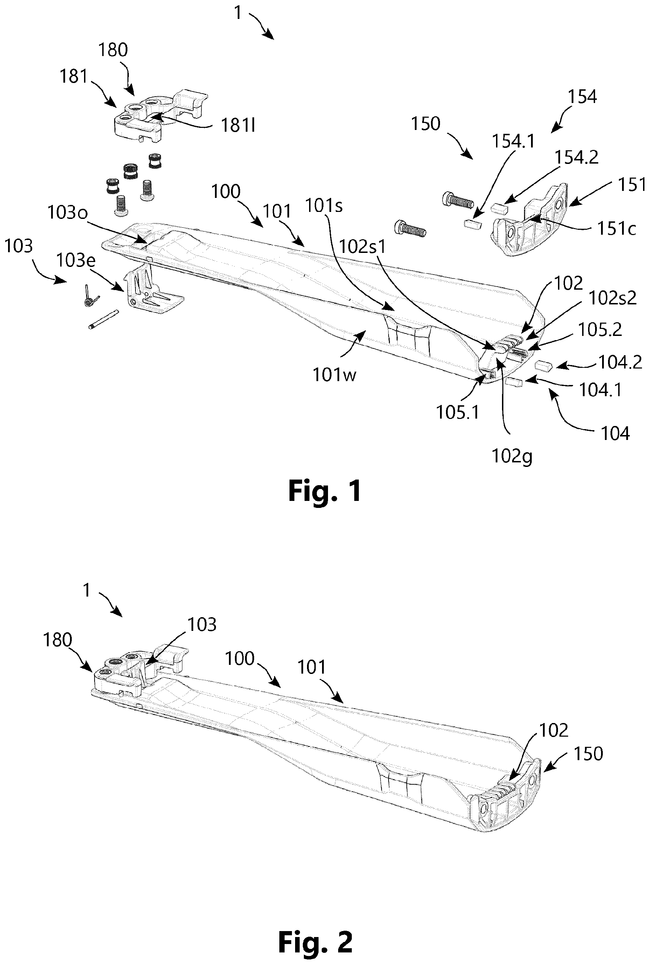

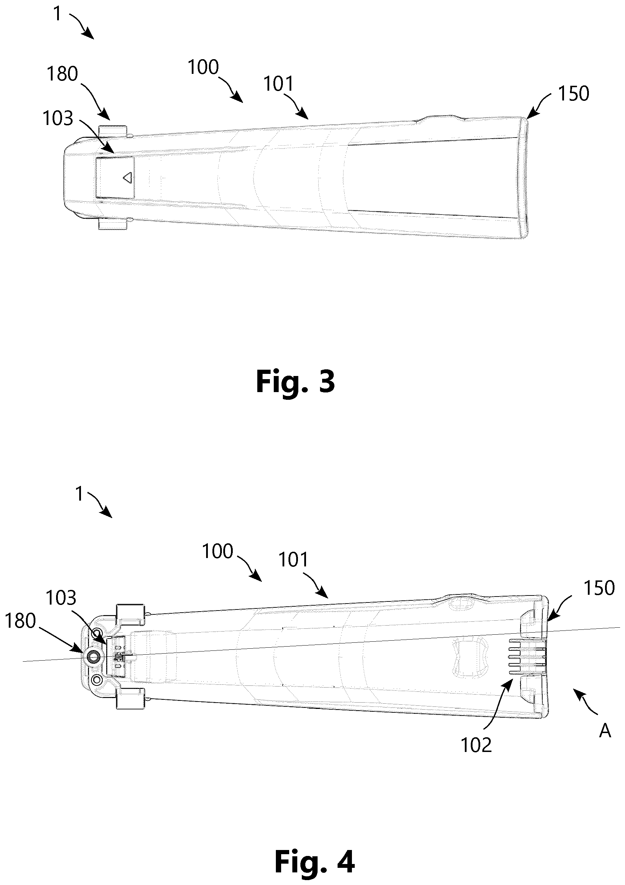

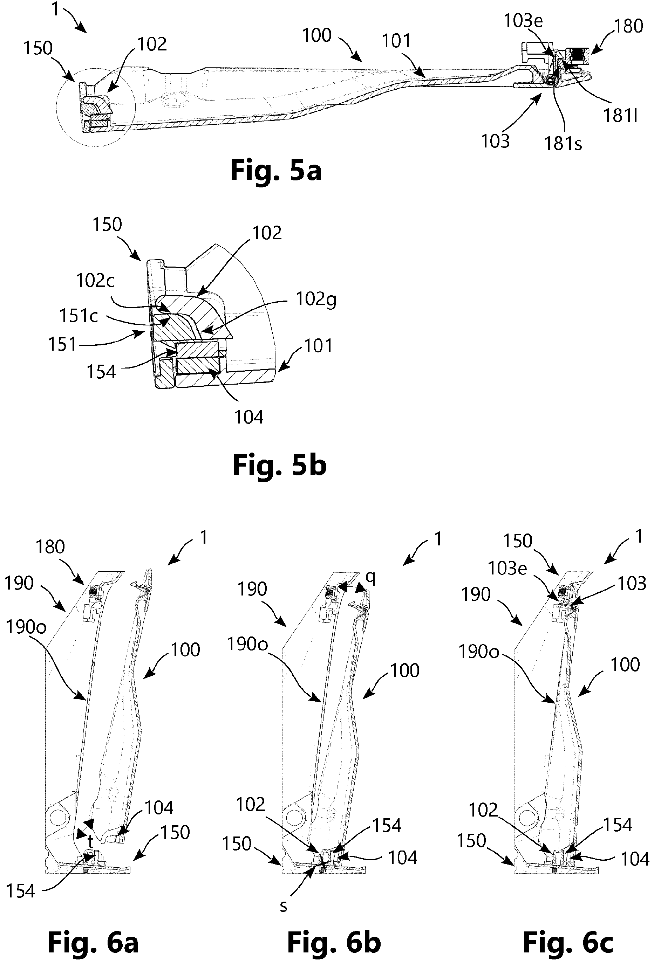

A first inventive cover arrangement 1 is shown as an explosion view from a cavalier perspective (fig. 1), in an assembled state from a cavalier perspective (fig. 2), as a direct top view of its outer side (fig. 3), as a direct top view of its inner side (fig. 4) and as a sectional view (fig. 5a, b) along a plane that is parallel to line A and perpendicular to the picture plane of fig. 4, wherein fig. 5b shows a detailed view of the circled section in fig. 5a. Fig. 6a to fig. 6c additionally show the cover arrangement 1 in different states during a mounting process in a similar section view to fig. 5a and fig. 5b.

The cover arrangement 1 comprises a removable cover 100 according to the invention, a pivot structure 150 and a locking structure 180. The pivot structure 150 and the locking structure 180 are connectable to a frame element of a bicycle (e.g. frame element 190 in fig. 6a to fig. 6c) using bolts, such that the cover 100 can cover an opening in the frame element (e.g. opening 190o in fig. 6a to fig. 6c). The cover 100 comprises a cover main body 101 and is connectable to the pivot structure 150 via a hook structure 102 and to the locking structure 180 via a locking mechanism 103. To guide a placement of the cover 100 into a mounting position during a mounting process (see fig. 6a to fig. 6c, described in detail further below), the cover 100 also comprises a magnet 104 to cooperate with a counter-magnet 154 of the pivot structure 150. In its closed position, cover 1 is connected to both the locking structure 180 and the pivot structure 150 as shown in fig. 1 to fig. 5a, b. In the following, the components of the cover arrangement 1 will be described in detail.

The cover main body 101, being made out of plastic, has a flat elongated shape whose width (vertical in fig. 3) grows from a minimal width at its first end (on its left side in fig. 1 to fig. 4) by about 60% to a maximum width at a second end (on its right side in fig. 1 to fig. 4). The length of the cover main body 101 (horizontal in fig. 3 and fig. 4) corresponds to around 4 times its maximum width and its thickness (vertical in fig. 5a, b) amounts to roughly 1 % of its length. An inner main surface 101s of the cover main body 101 is designated to face the locking structure 180 and the pivot structure 150 when the cover is in a closed position.

From its first end to about 40% of its length, the cover main body 101, as well as the inner main surface 101s, are relatively flat. On the remaining 60% of the cover main body's length, the inner main surface 101s and the outer main surface are bending outwards (downwards in fig. 4) with respect to the first section of the cover main body 101. In this region, wall sections 101w are formed, whose outer edges remain on about the same plane as the inner main surface at the first end of the cover main body 101. Thereby a bulge on the cover main body 101 with an indentation on the inner main surface 101s is formed, allowing also covering objects sticking out from a frame element.

The locking mechanism 103 is placed on a first end portion of the cover main body 101 at the first end of the cover 100. Locking mechanism 103 is a spring-loaded locking mechanism comprising a pivotally mounted L-shaped locking element 103e penetrating an opening 103o within the cover main body 101. On the outer side of the cover 100, the locking element 103e is pivotable against the spring force by manual actuation of its outer lever part.

Locking mechanism 103 is configured to cooperate with the locking structure 180 that is mountable to a frame element by bolts. Locking structure 180 comprises a locking body 181 with a locking surface 1811 facing away from the cover 100 in its closed position (see fig. 5a). Locking body 181 also comprises a sliding surface 181s facing towards cover 100 and having an inner angle of around 80 degree towards the locking surface 1811.

The hook structure 102 is placed on the inner main surface 101s on a second end portion of the cover main body 101 (see e.g. fig. 1), opposed to the first end portion, and centred in a lateral direction on cover 100 (vertical in fig. 4). The width of the hook structure 102 (vertical in fig. 4) is around one fourth of the local width of the cover main body 101 and the length (horizontal in fig. 4) corresponds to its width. The hook structure 102 has a proximal end on the inner main surface 101s and a distal free end that points away from the cover main body 101 in an axial direction (horizontal in fig. 4). It essentially comprises two parts, a proximal base part that is angled towards the inner main surface 101s with an inner angle of around 80 degrees and a distal angled part, that is angled towards the base part, with an inner angle of around 100 degrees. On its free end, the hook structure 102 is rounded in a direction that is perpendicular to the inner main surface 101s (see fig. 5a, b). The free end of the hook structure 102 is axially overhanging the second end of the cover main body 101 such that the free end of the hook structure 102 is axially further from the first end of the cover main body 101 than the second end of the cover main body 101 (see fig. 5a, b). The hook structure 102 comprises a contact surface 102c on the angled part of the hook structure 102, which faces the inner main surface 101s of the cover main body 101. The lateral sides of the hook structure 102 are formed by two parallel stabilizing surfaces 102s.1, 102s.2 (see fig. 1) which are parallel to an axial direction and face into opposing lateral directions. On the base part, the hook structure 102 comprises a guiding surface 102g adjacent to the contact surface 102c, facing towards the inner main surface 101s of the cover main body 101. The guiding surface 102g is perpendicular to the stabilizing surfaces 102g and angled towards the inner main surface 101s of the cover main body 101 with an inner angle of around 80 degrees.

The magnet 104 of the cover 100 comprises a first part 104.1 and a second part 104.2, both identically shaped and made of magnetized NdFeB. Each part 104.1 and 104.2 has a trapezoidal prism shape with a rectangular base face and a smaller rectangular top face parallel to the base face, wherein the first part 104.1 and the second part 104.2 are arranged on the cover 100 with their top face facing away from the cover main body 101. Each part 104.1 and 104.2 further comprises two equally sized opposing and angled rectangular side faces parallel to an axial direction and two equally sized opposing and parallel convex isosceles trapezoid shaped side faces perpendicular to an axial direction. The length (e.g horizontal in fig. 5a, b) of each part 104.1 and 104.2 is around three times their thickness (vertical in fig. 5a, b) and their maximum width (e.g. vertical in fig. 4), i.e. the width of the base face, corresponds to their thickness. The width of their top face amounts to around 80% of the width of the base face, while the length of both the base face and the top face are the same.

Each part 104.1 and 104.2 is a permanent magnet and the poles are arranged such, relative to the shape, that magnetic field lines of a magnetic field mainly penetrate through the top face and the base face. Thus, one magnetic pole is closer to the top face while the other is closer to the base face of the respective part 104.1 and 104.2.

Each part 104.1 and 104.2 of magnet 104 is housed in a first respectively second holding structure 105.1 and 105.2. Each holding structure 105.1 and 105.2 consists of three wall segments protruding from the inner main surface 101s. The inner faces of these wall segments correspond to a negative of three side faces of each part 104.1 and 104.2 of magnet 104. Thus, each holding structure 105.1 and 105.2 comprises two opposing inner faces that are rectangular and angled towards each other such that their distance reduces with growing distance from the cover main body 101. A third inner face in the shape of a convex isosceles trapezoid that is perpendicular to the inner main surface 101s connects the two opposing inner faces. The holding structures 105.1 and 105.2 are open on the top and thus the top faces of the magnet 104 are uncovered. Each part 104.1 and 104.2 can be inserted (during a production process) into the respective holding structure 105.1 and 105.2 in one axial direction, whereas the parts 104.1 and 104.2 are securely held in all other directions.

In an axial direction (e.g. horizontal in fig. 5a, b), both parts 104.1 and 104.2 of the magnet 104 have identical positions and the magnet 104 is arranged such that the parts 104.1, 104.2 of magnet 104 are in an axial region that comprises an undercut portion of the hook structure 102. Thereby the magnet 104 is comparatively close to the pivot body 151 throughout any swivel position (see fig. 6a - fig. 6c). The magnet 104 is placed such that it does not axially stick out further from the cover 100 than the second end of the cover main body 101. Thereby the magnet 104 is axially closer to the first end portion of the cover main body 101 than the distal free end of the hook structure 102. This allows the magnet 104 to exert a torque on the cover main body 101 in the mounting position (see fig. 6b) of cover 100, supporting a swivelling into the closed position (see fig. 6c). The regions of the magnet 104 that are axially closest to the first end of the cover main body 101 correspond to an axial position of the proximal end of the hook structure 102 and also the guiding surface 102g, making the cover 101 structurally resistant.

Laterally, each part 104.1 and 104.2 of the magnet 104 is adjacent to the hook structure 102, sandwiching the centred hook structure 102 laterally between the two parts 104.1 and 104.2. The two parts 104.1 and 104.2 are placed such that they have an identical distance to an axial centreline of the cover 101.

The hook structure 102 of the cover 100 is configured to cooperate with the pivot structure 150 of the cover arrangement 1. The pivot structure 150 comprises a pivot body 151 that is attachable to a frame element (e.g. frame element 190 in fig. 6a to fig. 6c) with bolts. The pivot body 151 comprises a pivot contact surface 151c facing away from the cover main body 101 in the closed position of the cover 100 (see fig. 5a, b) and being parallel to the inner main surface 101s of the cover main body 101. At the pivot contact surface 151c the thickness of the pivot body 151 (vertical in fig. 5a, b) corresponds to the shortest distance of the outer main surface of the cover main body 101 and the contact surface 102c of the hook structure 102. The width of the pivot contact surface 151c (vertical in fig. 5a, b) corresponds to the width of the hook structure 102. The thickness and the length (horizontal in fig. 5a, b) of the pivot body 151 laterally outside of its pivot contact surface 151c is larger than under the pivot contact surface 151c. Thereby, two pivot stabilizing surfaces laterally adjacent to the pivot contact surface 151c are formed that are perpendicular to the pivot contact surface 151c and face inwards. In other words, the pivot body 151 comprises an indentation that roughly corresponds to a negative of one side of the hook structure 102, where the pivot contact surface 151c and the pivot stabilizing surfaces form inner walls.

The pivot structure 150 additionally comprises a counter-magnet 154 consisting of two parts 154.1, 154.2. The parts 154.1, 154.2 are of the same type and same shape as the parts 104.1 and 104.2 of the magnet 104 of the cover 100, however vertically inversed. The parts 154.1 and 154.2 of the counter-magnet 154 are held within the pivot body 151 adjacent to the pivot contact surface 151c within indentations similar to the holding structures 105.1 and 105.2. Thereby, each part 154.1, 154.2 of the counter-magnet 154 is in direct contact with the parts 104.1, 104.2 of the magnet 104 when the cover is in the closed position (see fig. 5a, b and fig. 6c). The polarities of magnet 104 and counter-magnet 154 are such that the respective poles of the parts 104.1, 104.2 of the magnet 104 and the parts 154.1, 154.2 of the counter-magnet 154 of the pivot structure 150 facing each other are of opposite sign and hence magnet 104 and counter-magnet 154 attract each other during a mounting process.

During a mounting process, guiding surface 102g is likely to come into contact with pivot body 181 and guiding a correct placement of cover 100 into the mounting position. When cover 100 is brought into the mounting position (see fig. 6b), contact surface 102c at the free end of the hook structure 102 and pivot contact surface 151c of the pivot body 151 are in contact with each other, forming a hinge mechanism that allows for swiveling the cover 100 into the closed position about a swivel axis (as swivel axis s in fig. 6b). During the swiveling, the stabilizing surfaces 102s1 and 102s2 slide against the pivot stabilizing surfaces of pivot body 181, stabilizing the cover 100 against axial rotations.

During a final stage of the swivelling (see e.g. fig. 6b to fig. 6c), the locking element 103e will come into contact with sliding surface 181s of pivot body 181 of the pivot structure 180. Here the locking element 103e will be pivoted against the spring force such that it can pass the locking body 181 until it is fully inserted into the locking structure 180 (as e.g. shown in fig. 5a, b). When the locking element 103e is fully inserted, the spring force forces it under the locking body 181 to interlock with the locking surface 181l of the locking body 181, thus locking the cover 100 in the closed position. The locking mechanism 103 can be opened by manually actuating the locking element 103e and pivoting it against the spring force, such that it again is able to pass the locking body 181 and allowing for a reversed swivel motion.

Fig. 6a to fig. 6c show the cover arrangement 1 (partly) attached to a frame element 190 of a bicycle with different relative positions of the cover 100 as cross sections similar to the cross section of fig. 5a, b, i.e. in a plane that is parallel to line A in fig. 4 and perpendicular to the picture plane of fig. 4. Frame element 190 is a seat tube.

Fig. 6a shows the pivot structure 150 and the locking structure 150 attached to a frame element 190 by bolts and on opposing ends of an elongated opening 190o in the frame element 190. Cover 100 is in an unattached state and not connected to any of the other components, and hence opening 190o is freely accessible. To attach cover 100, it can be brought into the mounting position (fig. 6b) in a mounting process. For this purpose, the cover 100 can be linearly translated along the path of arrow t. During the mounting process, magnet 104 and counter-magnet 154 will exert a force onto each other and thus onto the cover 100, guiding the placement into the mounting position both along the path of arrow t and along directions perpendicular to arrow t.

Fig. 6b shows the frame element 190 with cover arrangement 1, with cover 100 being placed in the mounting position. The hook structure 102 is in contact with the pivot structure 150 and forms a hinge mechanism that allows swiveling the cover 100 into the closed position (fig. 6c). Swivel axis s is perpendicular to the picture plane of fig. 6b and at the center of the depicted star shape. Arrow q indicates a swivel direction of the cover 100 about the swivel axis s. In the mounting position of the cover 100, magnet 104 and counter-magnet 154 are in contact, but angled towards each other, thus still exerting a torque onto the cover 100 that supports the swiveling into the closed position. The magnet 104 and the counter-magnet 154 are dimensioned such that they exert an attractive force strong enough to swivel the cover 100 on the frame element 190 into the closed position, when no external forces other than the gravitational force act on the cover 100. Thus, it suffices bringing the cover 100 into the displayed mounting position and then letting it go, to allow for an automatic swiveling into the closed position. The locking mechanism 103 is not engaging the locking structure 180 in the mounting position. When the swivel motion along arrow q is completed, cover 100 is in the closed position as depicted in fig. 6c. Cover 100 completely covers the opening 190o and the locking mechanism on one side and the hook structure on the other side of the cover 100 fixating the cover 100 to the frame element 190.

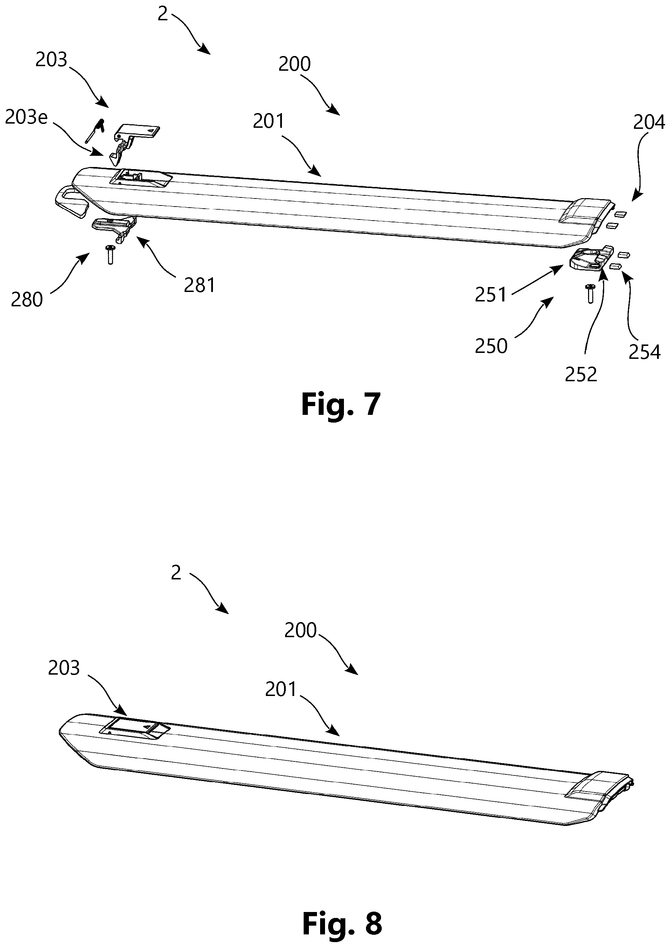

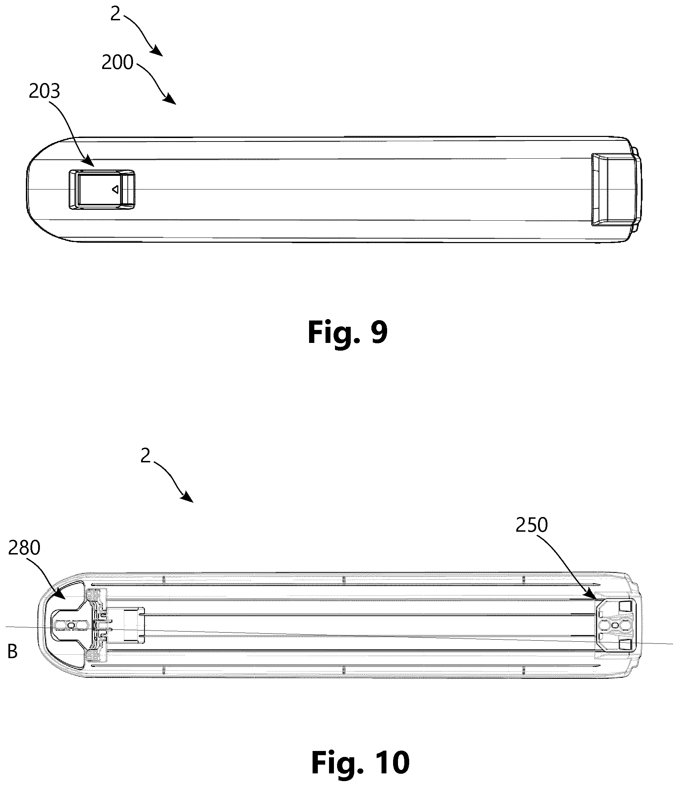

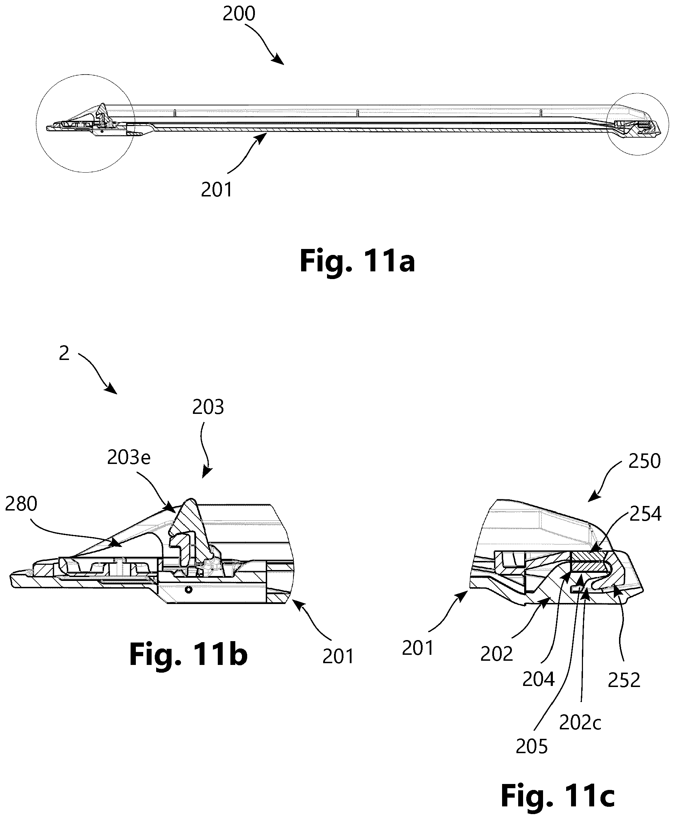

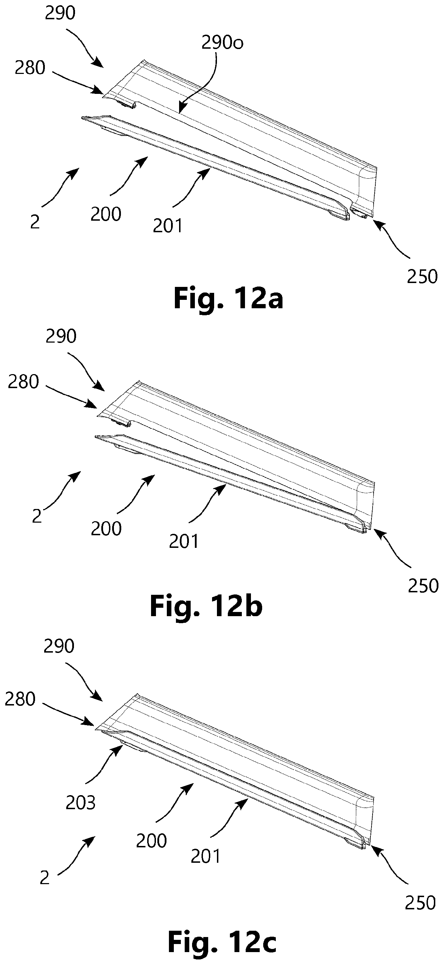

Fig. 7 to fig. 12 show a second inventive cover arrangement 2, as an explosion view from a cavalier perspective (fig. 7), in an assembled view from a cavalier perspective (fig. 8), as a direct top view of its outer side (fig. 9), as a direct top view of its inner side (fig. 10), as a sectional view along a plane that is parallel to line B and perpendicular to the picture plane of fig. 10 (fig. 11, wherein fig. 11b and fig. 11c show detailed views of the circled sections in fig. 11a) and in different states during a mounting process (fig. 12a to fig. 12c).

The cover arrangement 2 comprises a cover 200 according to the invention, a pivot structure 250 and a locking structure 280.

The cover 200 comprises an elongated cover main body 201 with an essentially homogenous shape and a constant width (vertical in fig. 10). The cover 200 comprises a spring loaded locking mechanism 203 on a first end portion of the cover main body 201 (left side of fig. 7 to fig. 11c). Similar to the locking mechanism 103 of the first cover 100, locking mechanism 203 comprises a spring loaded locking element 203e that is forced to interlock with a locking body of locking structure 280, when the cover 200 is in a closed position. By actuating the outer part of the locking element 203e, the locking mechanism 203 can be opened.

On a second end portion of the cover main body 201 and within a comparatively small bulge, cover 200 comprises a hook structure 202 (see fig. 11c). The width of the hook structure 203 corresponds to the width of the pivot structure 250 (vertical in fig. 10), which amounts to about 45% of the width of the cover main body 201. The height of the hook structure (vertical in fig. 11c) is about 4 times the thickness of the cover main body 201. The hook structure 202 comprises a proximal part with a smallest inner angle of 90 degree towards the local inner main surface of the cover main body 201. On the proximal part, the hook structure 202 comprises a distal angled part that has an inner angle of about 110 degree towards the proximal part. The upper face of the angled part, facing away from the cover main body 201, is parallel to the inner main surface of the cover main body 201, except for a holding structure 205 for a magnet 204 (described below). The free end of the hook structure 203 is rounded in a direction vertical to the inner main surface (see fig. 11c). The hook structure further comprises a contact surface 202c facing towards the cover main body 201. Contact surface 202c comprises a rounded indentation that corresponds to a negative of a pivot contact surface of a counter-hook structure 252 (described further below).

A magnet 204 of cover 200 comprises a first part and a second part, both made out of NdFeB, whose shape is similar to the first and second part 104.1 and 104.2 of magnet 104 of cover 100. However, an end face of each part is angled towards their base face, with an inner angle that is less than 90 degrees. Therefore, the side faces of the parts of the magnet 204 are not fully rectangular (see fig. 11c). The parts of the magnet 204 are held within indentations within the top face of the hook structure 202, similar to the holding structures 105.1 and 105.2 of cover 100. The top faces of the two parts of magnet 204 are not covered and are flush with the outer top face of the hook structure 202.

Hook structure 202 is configured to interlock with pivot structure 250. Pivot structure 250 comprises a counter-hook structure 252. The free end of counter-hook structure 252 faces towards a geometrical centroid of the cover 200 in a closed position of cover 200, i.e. in an opposite direction of hook structure 202. A distal part together with a pivot contact surface of the counter hook structure 252 is angled towards the top surface of the hook structure 202 with an inner angle of around 10 degrees, allowing for enough range of motion between a mounting position and a closed position for cover 200.

The pivot structure 250 additionally comprises a counter-magnet 254 in an undercut portion of the pivot structure 250. The counter-magnet 254 comprises two parts that are similar to the two parts of magnet 204 and positioned such that they are in contact with magnet 204 when the cover 200 is in the closed position.

Fig. 12a to fig. 12c show a section view of cover arrangement 2 installed on a frame element 290 of a bicycle to cover an opening 290o. Frame element 290 is a down tube. Fig. 12a shows the cover 200 in an unattached state while locking structure 280 and pivot structure 250 are connected to frame element 290 around opening 290o. When the second end of cover 200 is translated towards pivot structure 250, the magnet 204 and the counter-magnet 254 (see fig. 11) will guide the positioning of the cover until cover 200 is in a mounting position. Fig 12b shows cover 200 in the mounting position. The hook structure 202 and the counter-hook structure 252 (see fig. 11) already interlock to form a hinge mechanism while the locking mechanism is not in contact with locking structure 280. The hinge mechanism allows for pivoting of cover 200 to the closed position and magnet 204 and counter-magnet 254 exert a torque that supports the pivoting. When the cover 200 is swivelled into the closed position depicted in fig. 12c the locking mechanism 203 (see fig. 11b) will automatically lock the cover in place such that it is securely held by the pivot structure 250 and the locking structure 280. Actuating locking mechanism 203 then allows to swivel the cover 200 back into the mounting position.

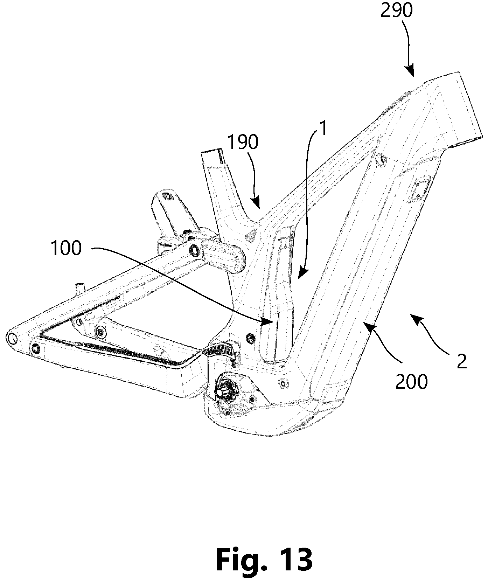

Fig. 13 depicts a bicycle frame for an electric bicycle with frame elements 190 290 on which the cover arrangement 1 and cover arrangement 2 are installed respectively. Frame element 190 is a seat tube and frame element 290 a down tube of the bicycle. Cover arrangement 1 with cover 100 is used to cover an accommodation for a shock absorber within the seat tube while cover arrangement 2 with cover 200 is used to cover a drive battery of the bicycle within the down tube.

The invention is not limited to the above embodiments. For example a cover of the first or the second cover arrangement could have a different shape like e.g. a completely flat shape. The cover could also have a different length with respect to its width, e.g. a length that is only twice its length. The locking mechanism could be a turn locking mechanism, especially a ¼ turn locking mechanism, or any other kind of locking mechanism. The hook structure could have a different shape, e.g. a partly round shape. The hook structure could also comprise several hook shaped parts. The magnet could consist of only one part or comprise more than two parts and each part could have an individual shape that differs from the shape of the other parts. The magnet could be fixated to the cover e.g. by bolts. Instead of a magnet, the cover could also comprise a ferromagnetic element. The pivot structure and the locking structure of the first or the second embodiment could be a single body, e.g. configured to frame an opening in a frame element (like a seat tube or a down tube). The pivot structure could comprise a ferromagnetic counter-element. The pivot structure could also be integral with the frame element. The locking structure could comprise an aperture for a turning element of a turn locking mechanism. The locking structure could also be integral with the frame element. The ferromagnetic counter-element could also be integral with the frame element.

In summary, it is to be noted that the cover with a cover main body, a locking mechanism, a hook structure and a magnet or ferromagnetic element creates a cover that is easy and intuitive to use and at the same time safe and robust.

## Claims

1. Removable cover for an opening in a frame element of a bicycle, comprising:
a) a cover main body;
b) a locking mechanism arranged in a first end portion of the cover main body to lock the cover to the frame element in a closed position of the cover;
c) a hook structure arranged on an inner main surface of the cover main body, on a second end portion of the cover main body opposite the first end portion, to cooperate with the frame element by interlocking the hook structure and a pivot structure of the frame element and creating a hinge mechanism allowing for swivelling the cover relative to the frame element about a swivel axis in the second end region, between a mounting position and the closed position;
wherein
d) a magnet or a ferromagnetic element is arranged on the cover, in the second end portion of the cover main body to cooperate with a ferromagnetic counter-element or a counter-magnet on the frame element in order to guide a placement of the cover into the mounting position during a mounting process of the cover.

2. Cover according to claim 1, **characterized in that** the magnet or ferromagnetic element is arranged in an axial region of the second end portion comprising an undercut portion of the hook structure.

3. Cover according to claim 1 or 2, **characterized in that** the magnet or ferromagnetic element is placed axially closer to the first end portion of the cover main body than a distal free end of the hook structure.

4. Cover according to any one of claims 1 to 3, **characterized in that** the magnet or ferromagnetic element has an axial position that corresponds to an axial position of a proximal end of the hook structure.

5. Cover according to any one of claims 1 to 4, **characterized in that** the magnet or ferromagnetic element laterally extends further from an axial centreline of the cover main body, in particular in two opposing lateral directions, than the hook structure.

6. Cover according to any one of claims 1 to 5, **characterized in that** the hook structure comprises a guiding surface, said guiding surface facing towards the inner main surface of the cover, wherein the guiding surface has an inner angle towards a plane that is parallel to the inner main surface of the cover at a proximal end of the hook structure, which inner angle is less than 90° and wherein the magnet or ferromagnetic element is axially placed at a proximal end of the guiding surface.

7. Cover according to claim 1 or 2, **characterized in that** the magnet or ferromagnetic element is placed on the hook structure, in particular on a free end of the hook structure.

8. Cover according to any one of claims 1 to 7, wherein the hook structure comprises a first and a second stabilizing surface on two opposing lateral sides of the hook structure, the first and the second stabilizing surface being arranged perpendicular to the swivel axis to cooperate with the pivot structure of the frame element, preventing the cover from axial rotations.

9. Cover according to any one of claims 1 to 8, **characterized in that** the magnet or ferromagnetic element comprises a first part and a second part, wherein the first part and the second part assume different lateral positions on the cover.

10. Cover according to claim 9, wherein the first part of the magnet or ferromagnetic element and the second part of the magnet or ferromagnetic element have an identical axial position and are laterally placed on different sides of an axial centreline of the cover, preferably with each of the parts of the magnet or ferromagnetic element having an identical distance to the axial centreline of the cover.

11. Cover according to claim 10, **characterized in that** the hook structure is laterally placed between the first part and the second part of the magnet or ferromagnetic element.

12. Cover according to any one of claims 1 to 11, **characterized in that** the locking mechanism is a spring loaded locking mechanism or a turn locking mechanism, in particular a ¼ turn locking mechanism.

13. Cover according to any one of claims 1 to 12 **characterized in that** the first part and/or the second part of the magnet or ferromagnetic element has a trapezoidal prism shape with a rectangular base face and a smaller rectangular top face parallel to the base face, wherein the first and/or second part is arranged on the cover with its top face facing away from the cover main body.

14. Cover according to claim 12 **characterized in that** a first and/or a second holding structure for the first part respectively the second part of the magnet or ferromagnetic element is placed on the cover main body, the first and/or the second holding structure comprising at least two opposing inner holding surfaces that have a same angle and distance towards each other as two angled side faces of the first respectively the second part of the magnet or ferromagnetic element.

15. Cover arrangement, comprising;
d) a cover according to any one of claims 1 to 14;
e) a pivot structure for a frame element that is configured for creating a hinge mechanism with the hook structure of the cover in the mounting position of the cover, the pivot structure comprising a counter-magnet or ferromagnetic counter-element;
f) a locking structure for the frame element that is configured to cooperate with the locking mechanism of the cover to lock the cover in its closed position.

16. Cover arrangement according to claim 13, **characterized in that** the pivot structure comprises a counter-hook structure that is configured to cooperate with the hook structure of the cover, wherein the hook structure and the counter-hook structure interlock to form the hinge mechanism.

17. Cover arrangement according to one of claims 13 to 14, wherein the cover is a cover according to any one of claims 1, 2, 4 - 6 and 8 - 14 in combination with claim 3, and wherein the pivot structure comprises a counter-magnet, wherein the magnet or ferromagnetic element and the counter-magnet are dimensioned such that they exert an attractive force strong enough in the mounting position of the cover to swivel the cover on the frame element into the closed position, when no external forces other than the gravitational force act on the cover.

18. Use of the cover according to one of claims 1 to 14 to cover an accommodation for a shock absorber or for a drive battery or for a storage space such as for tools, inner tubes or clothes.
